# EUROPEAN PATENT SPECIFICATION

(11) **EP 4 116 603 B1**
(45) Date of publication and mention of the grant of the patent: **15.01.2025**
(21) Application number: 21763901.2
(22) Date of filing: 26.02.2021
(51) Int. Cl.: F16H 7/24

(54) **AUXILIARY TOOL FOR BELT INSTALLATION JIG, AND BELT INSTALLATION METHOD**
HILFSWERKZEUG FÜR BANDMONTAGEVORRICHTUNG UND BANDMONTAGEVERFAHREN
OUTIL AUXILIAIRE POUR GABARIT D'INSTALLATION DE COURROIE, ET PROCÉDÉ D'INSTALLATION DE COURROIE

(30) Priority: 03.03.2020 JP 2020036101; 25.06.2020 JP 2020109605
(43) Date of publication of application: 11.01.2023
(73) Proprietor: Mitsuboshi Belting Ltd., Kobe-shi, Hyogo 653-0024 (JP)
(72) Inventor: ITO, Takehiko, Kobe-shi, Hyogo 653-0024 (JP); MORIYAMA, Kazuya, Kobe-shi, Hyogo 653-0024 (JP); ITO, Hiroyuki, Kobe-shi, Hyogo 653-0024 (JP)
(74) Representative: Hoffmann Eitle
(86) International application number: PCT/JP2021/007567
(87) International publication number: WO 2021/177196

(56) References cited:
- EP-A1- 3 012 485
- WO-A1-2012/008062
- CN-U- 209 604 498
- JP-A- 2009 222 101
- JP-A- 2016 070 492
- US-A- 774 576

## Description

### TECHNICAL FIELD

The present invention relates to an auxiliary tool and a belt installation method, the auxiliary tool fixes a belt installation jig used to wind a belt, which is to be wound around a plurality of pulleys and is stretchable in a circumferential length direction, around the pulleys.

### BACKGROUND ART

Regarding a belt power transmission mechanism used by winding a belt around a plurality of pulleys, for example, there is a layout in which there is no tension pully whose axial center position can be adjusted, and inter-axial distances of the plurality of pulleys are all fixed. In general, in order to reliably transmit power between the pulleys, such a belt power transmission mechanism has a specification in which a belt circumferential length is set to be smaller than a layout circumferential length between the pulleys to be mounted so that a strong tension is applied to the belt.

As a method for installing a belt having a circumferential length shorter than a layout circumferential length between a plurality of pulleys as described above, for example, the following method is used. First, one pulley is left, and a belt is first wound around the other pulley(s). Then, using a belt installation jig, the belt is installed to an outer circumferential surface of the last pulley while applying tension to the belt wound around the other pulley(s) and rotating the last pulley.

For example, Patent Literature 1 discloses a configuration in which "a belt holder 5 is provided at a body portion 2 fixed to one side surface side of a last pulley P1, the belt holder 5 extends from a center side of the pulley P1 toward an outer diameter side of the pulley P1 so as to be convex toward a rotation direction side of the pulley P1, includes a region on the outer diameter side of the pulley P1 formed by a curved surface of an involute curve, and faces a tangential direction of an outer circumferential surface of the pulley P1 at an end portion on the outer diameter side of the pulley P1, in which a belt V wound around the other pulley(s) is partially wound around and held in a region on the center side of the pulley P1 of the belt holder 5, a holding region of the belt V partially wound and held is moved toward the outer diameter side of the pulley P1 with rotation of the pulley P1, and the held belt V is guided to the outer circumferential surface of the pulley P1 from an end portion on the outer diameter side of the pulley P1 facing the tangential direction of the outer circumferential surface of the pulley P1". In this installation method, as a fixing unit for fixing the plate-shaped body portion 2 to the pulley P1, a method is disclosed in which a center bolt 3 serving as a central axis of the pulley P1 is fitted into a circular through hole 4 provided in a center portion of the body portion 2 to fix the body portion 2 to the pulley P1.

Further, Patent Literature 2 discloses a configuration of "a belt installation jig to be mounted on a third pulley over which a stretchable power transmission belt is lastly hung when the power transmission belt is attached to a first pulley, a second pulley, and the third pulley in a triaxial layout, in which the belt installation jig includes: a jig body portion 10 that is attached to a side surface side of the third pulley and is accommodated in a recessed portion of the third pulley; a jig fixing portion 15 that fixes the jig body portion 10 to the third pulley via a through hole of the third pulley; and a belt receiving portion 20a that is provided adj acent to the jig body portion 10 and includes a belt receiving surface 22 which receives an inner peripheral surface of the power transmission belt on a side of the third pulley and which is parallel to a pulley axis direction, and in which a belt approaching portion 23a that receives one side surface of the power transmission belt and causes the power transmission belt to approach the third pulley side is provided in a part of the belt receiving surface 22 that coincides with an outer circumferential surface of the third pulley". In this method, after the belt installation jig is mounted on the pulley and the power transmission belt is wound around the first pulley and the second pulley, when the pulley is rotated by using a wrench and tension of the power transmission belt is applied to the belt installation jig, the jig body portion of the belt installation jig is pressed against an inner wall of the recessed portion of the third pulley by the tension, and the belt installation jig can be made difficult to separate from the third pulley.

### CITATION LIST

### PATENT LITERATURE

Patent Literature 1: JP-A-2014-029191
Patent Literature 2: JP-A-2016-070305
Patent Literature 3: JP-A-2016-070492
Further related prior art may be found in WO 20212/008062 A1, which discloses an auxiliary tool that fixes a belt installation jig to a pulley, the belt installation jig being used to wind a belt that is stretchable in a circumferential length direction around a plurality of pulleys.

### SUMMARY OF INVENTION

### TECHNICAL PROBLEM

In the installation method of Patent Literature 2, at a stage before the tension of the belt is applied to the belt installation jig, the belt installation jig is merely hooked on the through hole of the pulley via the jig fixing portion. Therefore, the belt installation jig is not completely fixed to the pulley, and is mounted on the pulley in a state in which a certain backlash (clearance) is present with respect to the rotation direction of the pulley. In this stage, for example, when a hand of an operator comes into contact with the installation jig or the installation jig is pushed back when tension is applied to the belt, the belt installation jig may fall off from the pulley. In addition, when the operator puts his/her hand on and presses the belt installation jig so that the belt installation jig does not fall off, the hand may be caught between the belt and the pulley. The belt installation jig in Patent Literature 1 also has the same problem as that of Patent Literature 2.

In addition, in the case where a belt is mounted between pulleys in a triaxial layout, a pulley (for example, a crank pulley) which has the largest diameter and around which a long belt portion is wound is generally selected as a pulley on which a belt installation jig is mounted and the belt is lastly hung, as in Patent Literature 1 and Patent Literature 2.

However, as described in Patent Literature 3, in relation to a structure of a belt power transmission mechanism and peripheral components, there is a case where a small-diameter pulley, which is not a pulley having the largest diameter, needs to be selected as a pulley to which a belt installation jig is to be attached. In such a case, when the belt installation jig is attached to the small-diameter pulley and the belt is lastly wound around the small-diameter pulley, the belt portion wound around the small-diameter pulley is shorter than that wound around the large-diameter pulley. Therefore, the tension of the belt when the belt is wound is increased, the belt installation jig and the small-diameter pulley are likely to rotate idly or reversely, and the belt installation jig is likely to fall off from the pulley. Therefore, in order to prevent the belt installation jig and the pulley from rotating idly or reversely due to the tension of the belt, the belt installation jig is required to be firmly fixed to the small-diameter pulley.

Therefore, the present invention has been made in order to solve the above-described problems, and provided are an auxiliary tool for a belt installation jig and a belt installation method, which can prevent the belt installation jig and the pulley from rotating idly or reversely due to tension of a belt when the belt is wound around a plurality of pulleys, and can smoothly perform an operation of winding the belt.

### SOLUTION TO PROBLEM

According to one embodiment of the present invention, there is provided an auxiliary tool that fixes a belt installation jig to a pulley, the belt installation jig being used to wind a belt that is stretchable in a circumferential length direction around a plurality of pulleys, characterized in that the auxiliary tool including an annular part stretchable in a radial direction and terminals,
in which the annular part has an outer diameter larger than an inner diameter of a bottomed cylindrical recessed portion provided on a side surface of the pulley in a state in which no external force is applied,
in a state in which the annular part is contracted in the radial direction, the annular part is configured to be capable of pressing an inner wall of the recessed portion in a state in which the annular part is in contact with a bottom portion of the recessed portion, and
one of the terminals is configured to be capable of being attached the belt installation jig.

According to the above configuration, the annular part of the auxiliary tool is brought into contact with the inner wall of the bottomed cylindrical recessed portion provided on the side surface of the pulley in a state in which the annular part of the auxiliary tool is contracted, and then the contraction of the annular part is released, so that the annular part of the auxiliary tool can press the inner wall of the recessed portion. Accordingly, the auxiliary tool having the one terminal to which the belt installation jig is attached can be firmly fixed to a pulley. That is, the belt installation jig can be firmly fixed to the pulley via the auxiliary tool.

When the annular part is brought into contact with the bottom surface of the recessed portion provided on the side surface of the pulley, the movement of the one terminal, to which the belt installation jig is attached, in the pulley axis direction can be restrained. Accordingly, the belt installation jig can be appropriately positioned in the pulley axis direction.

According to another embodiment of the present invention, in the auxiliary tool of the belt installation jig, the other terminal of the auxiliary tool may include an engaging portion that engages with a hole provided in the side surface of the pulley.

According to the above configuration, the engaging portion provided at the other terminal of the auxiliary tool can be engaged with the hole provided in the side surface of the pulley. Accordingly, a movement of the auxiliary tool itself in a pulley rotation direction can be restrained when the stretchable belt is wound around a pulley by using a rotation of the pulley. Therefore, the belt installation jig can be prevented from being displaced or slipping from the pulley even when a reaction force acts on the belt installation jig from the belt during the installation operation of the belt.

According to another embodiment of the present invention, in the auxiliary tool of the belt installation jig, the auxiliary tool may be formed by bending a single rod-shaped material.

According to the above configuration, it is not necessary to combine a plurality of components, so that cost performance can be improved.

According to another embodiment of the present invention, there is provided a belt installation method of winding a belt stretchable in a circumferential length direction around a plurality of pulleys, the method including:
attaching a belt installation jig to one terminal of an auxiliary tool including an annular part stretchable in a radial direction and terminals; and
bringing the annular part into contact with a bottom portion of a bottomed cylindrical recessed portion provided on a side surface of a pulley in a state in which the annular part is contracted, and then releasing the contraction of the annular part to make the annular part press an inner wall of the recessed portion.

According to the above method, the annular part of the auxiliary tool is brought into contact with the inner wall of the bottomed cylindrical recessed portion provided on the side surface of the pulley in a state in which the annular part of the auxiliary tool is contracted, and then the contraction of the annular part is released, so that the inner wall of the recessed portion can be pressed by the annular part of the auxiliary tool. Accordingly, the auxiliary tool having the one terminal to which the belt installation jig is attached can be firmly fixed to the pulley. That is, the belt installation jig can be firmly fixed to the pulley via the auxiliary tool.

When the annular part is brought into contact with the bottom surface of the recessed portion provided on the side surface of the pulley, the movement of the one terminal, to which the belt installation jig is attached, in the pulley axis direction can be restrained. Accordingly, the belt installation jig can be appropriately positioned in the pulley axis direction.

According to another embodiment of the present invention, the belt installation method may further contain,
engaging an engaging portion provided at the other terminal of the auxiliary tool with a hole provided in the side surface of the pulley.

According to the above method, a movement of the auxiliary tool itself in a pulley rotation direction can be restrained when the stretchable belt is wound around a pulley by using a rotation of the pulley. Therefore, the belt installation jig can be prevented from being displaced or slipping from the pulley even when a reaction force acts on the belt installation jig from the belt during the installation operation of the belt.

According to another embodiment of the present invention, the belt installation method may further contain:
interposing a thin member with a smooth surface between the belt hung to the pulley to which the auxiliary tool is fixed from another pulley of the plurality of pulleys and a side surface of the pulley to which the auxiliary tool is fixed; and
rotating the pulley to which the auxiliary tool is fixed in a state in which the thin member is interposed between the belt and the side surface of the pulley to which the auxiliary tool is fixed.

According to the above method, the thin member with a smooth surface is interposed between the belt and the side surface of the pulley in a state in which the belt passes through the side surface of the pulley and is introduced to an outer circumference of the pulley via the belt installation jig. Therefore, in a series of winding operations of the belt, the belt hung between the other pulley and the pulley to which the auxiliary tool is fixed moves from an inner side to an outer side in the radial direction of the pulley together with the thin member. Accordingly, the belt can smoothly pass through the step without being caught by a step between the recessed portion of the pulley and the side surface of the pulley. As a result, it is possible to prevent twisting and damage caused by the belt being caught by the step.

### ADVANTAGEOUS EFFECTS OF INVENTION

It is possible to provide an auxiliary tool for a belt installation jig and a belt installation method, by which the belt installation jig and a pulley can be prevented from rotating idly or reversely due to tension of a belt when the belt is wound around a plurality of pulleys, and an operation of winding the belt can be smoothly performed.

### BRIEF DESCRIPTION OF DRAWINGS

[FIG. 1] FIG. 1 is a perspective view of an auxiliary tool according to a first embodiment, to which a belt installation jig is attached.
[FIG. 2] FIG. 2 is six principal views of the auxiliary tool according to the first embodiment.
[FIG. 3] FIG. 3 illustrates a layout of a first pulley, a second pulley, and a third pulley according to the first embodiment.
[FIG. 4] FIG. 4 is an illustration view of the first pulley according to the first embodiment.
[FIG. 5] FIG. 5 is an illustration view of a method for using the auxiliary tool according to the first embodiment, to which the belt installation jig is attached.
[FIG. 6] FIG. 6 is an illustration view of the method for using the auxiliary tool according to the first embodiment, to which the belt installation jig is attached.
[FIG. 7] FIG. 7 is an illustration view of the method for using the auxiliary tool according to the first embodiment, to which the belt installation jig is attached.
[FIG. 8] FIG. 8 is an illustration view of the method for using the auxiliary tool according to the first embodiment, to which the belt installation jig is attached.
[FIG. 9] FIG. 9 is an illustration view of a pulley according to another embodiment, in which two recessed portions are formed in a stepped manner in a pulley axial direction.
[FIG. 10] FIG. 10 is an illustration view of a method for using an auxiliary tool according to a second embodiment, to which a belt installation jig is attached.
[FIG. 11] FIG. 11 is an illustration view of the method for using the auxiliary tool according to the second embodiment, to which the belt installation jig is attached.
[FIG. 12] FIG. 12 is an illustration view of the method for using the auxiliary tool according to the second embodiment, to which the belt installation jig is attached.

### DESCRIPTION OF EMBODIMENTS

### (First Embodiment)

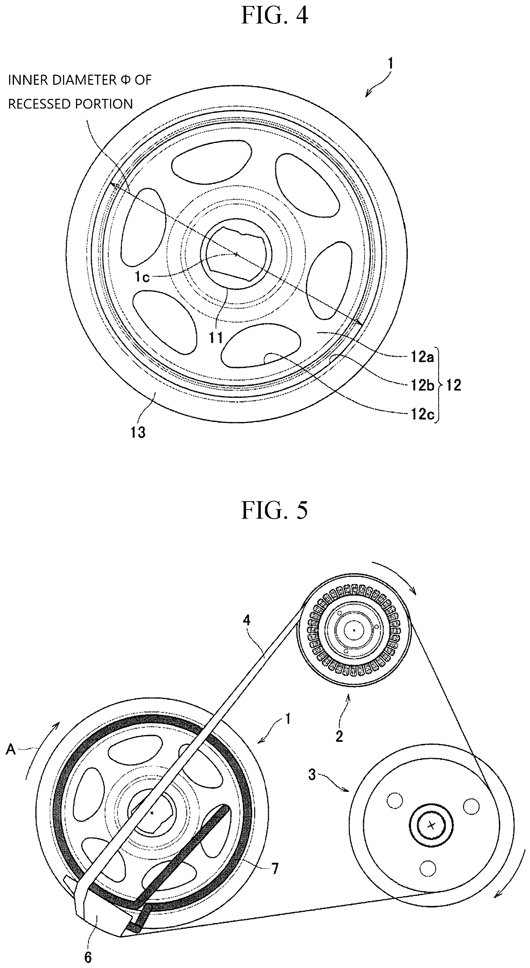

Embodiments of the present invention will be described hereinafter with reference to the accompanying drawings. An auxiliary tool 7 of a belt installation jig 6, according to the present embodiment is used to wind a V-ribbed belt 4, which is stretchable in a circumferential length direction, around a first pulley 1, a second pulley 2, and a third pulley 3 in a state in which the inter-axial distances therebetween are all fixed, as illustrated in FIG. 5.

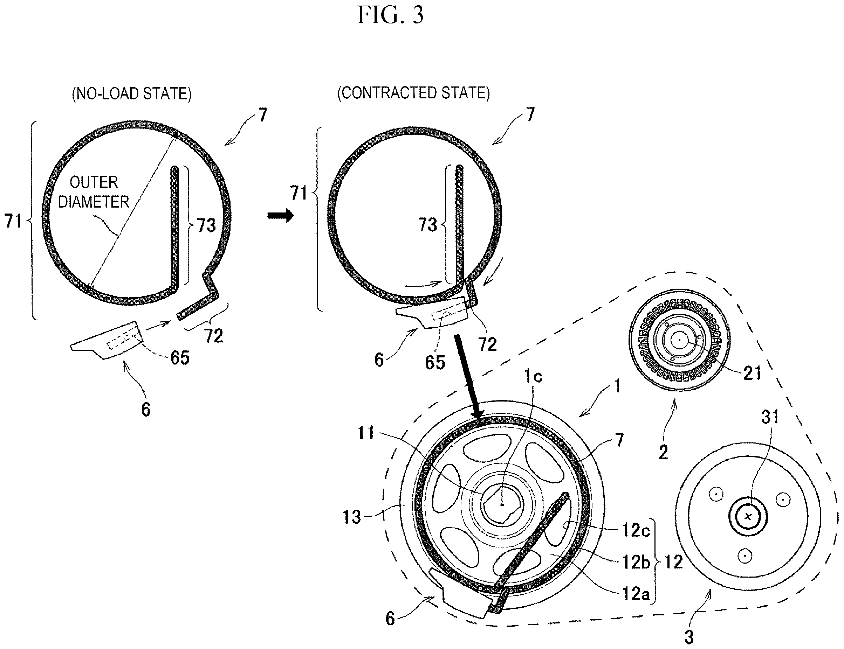

In an engine layout of an automobile, the first pulley 1 (a crank pulley) to be coupled to a crankshaft of an engine or the like, the second pulley 2 (a water pump pulley) for driving a water pump, and the third pulley 3 (an air conditioner pulley) to be coupled to a shaft of a compressor of an air conditioner or the like are rotatably supported in a state in which inter-axial distances thereof are all fixed, as illustrated in FIG. 3. The V-ribbed belt 4 is wound around the first pulley 1, the second pulley 2, and the third pulley 3, and power of the crankshaft of the engine or the like is transmitted to a shaft of the water pump via the first pulley 1 and the second pulley 2 to drive the water pump. In addition, the power of the crankshaft of the engine or the like is transmitted to the shaft of the compressor via the first pulley 1, the second pulley 2, and the third pulley 3 to drive the compressor. In the present embodiment, the inter-axial distances of the first pulley 1, the second pulley 2, and the third pulley 3 are fixed (unchangeable). Further, no tension applying unit (tension pulley or auto-tensioner) for applying tension to the V-ribbed belt 4 is mounted.

### (Structures of First Pulley 1, Second Pulley 2, and Third Pulley 3)

The first pulley 1 includes pulley grooves (not illustrated, grooves provided on an outer circumference of the first pulley 1) into which a plurality of ribs 4a (not illustrated) formed on an inner peripheral surface of the V-ribbed belt 4 to be described later can be respectively fitted, and a pair of flanges 13 that sandwich the pulley groove in an axial direction of the first pulley 1.

As illustrated in FIG. 4, a boss portion 11 into which the crankshaft of the engine or the like is inserted is formed on an axis 1c of the first pulley 1 (note that a crank can be mounted on the boss portion 11). In addition, a bottomed cylindrical recessed portion 12 is provided on a side surface of the first pulley 1. The recessed portion 12 includes a bottom surface 12a (circular shape) perpendicular to the axis 1c of the first pulley 1, a cylindrical inner wall 12b around the axis 1c of the first pulley 1 as a central axis, and six through holes 12c having a semicircular shape (rounded shape) formed (cut out) in the bottom surface 12a in a manner of surrounding the axis 1c of the first pulley 1. The inner diameter φ of the recessed portion 12 is the diameter of the cylindrical inner wall 12b.

Similar to the first pulley 1, the second pulley 2 includes pulley grooves (grooves provided on an outer circumferential portion of the second pulley 2) into which the plurality of ribs 4a formed on the inner peripheral surface of the V-ribbed belt 4 can be respectively fitted. A shaft to be interlocked with the water pump is inserted into a boss portion 21 formed at a center portion of the second pulley 2.

Similar to the second pulley 2, the third pulley 3 includes pulley grooves (grooves provided on an outer circumferential portion of the third pulley 3) into which the plurality of ribs 4a formed on the inner peripheral surface of the V-ribbed belt 4 can be respectively fitted. A shaft to be interlocked with the compressor is inserted into a boss portion 31 formed at a center portion of the third pulley 3.

In the present embodiment, as illustrated in FIG. 3, the auxiliary tool 7 on which a belt installation jig 6 to be described later is mounted is attached to the first pulley 1 having the largest diameter among the three pulleys (the first pulley 1, the second pulley 2, and the third pulley 3).

### (V-Ribbed Belt 4)

The V-ribbed belt 4 is a so-called low-modulus belt that is slightly stretchable in the circumferential length direction. The low-modulus belt has a relatively lowered elastic modulus since polyamide fibers are used as a core wire, and a rapid decrease in tension is prevented as compared with the case of high-modulus (so-called high-modulus belt). The plurality of ribs 4a extending in the circumferential length direction and having a V-shaped cross section in the width direction are provided on the inner peripheral surface of the V-ribbed belt 4. The plurality of ribs 4a can be respectively fitted into the pulley grooves provided in the outer circumferential portion of the first pulley 1, the second pulley 2, and the third pulley 3.

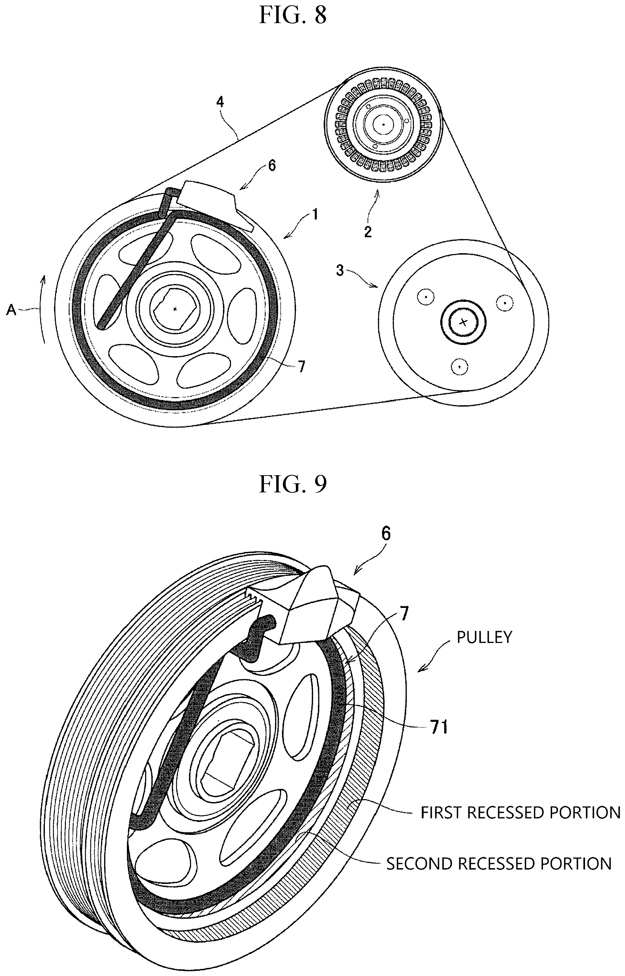

An arrow A in FIG. 8 indicates a running direction of the V-ribbed belt 4, and a rotation direction of the first pulley 1 when the V-ribbed belt 4 runs in the running direction is defined as a rotation direction A (see FIG. 5), and a direction opposite to the rotation direction A is defined as a reverse rotation direction B.

### (Configuration of Belt Installation Jig 6)

Next, a configuration of the belt installation jig 6 used in the present embodiment will be described. The belt installation jig 6 is used in a state of being mounted on the auxiliary tool 7 to be described later.

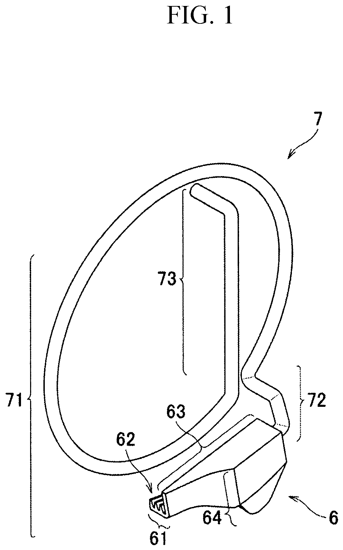

As illustrated in FIG. 1, the belt installation jig 6 includes, as main components, a pulley pressing portion 61 provided with ribs 62 that can be respectively fitted into the pulley grooves provided on the outer circumferential portion of the first pulley 1, a contact portion 63 that comes into contact with a side surface of the flange 13, and a belt guide portion 64.

In the pulley pressing portion 61, in a state in which the belt installation jig 6 is in contact with the outer periphery of the first pulley 1, the plurality of ribs 62 provided on a back side of the pulley pressing portion 61 are respectively fitted into the pulley grooves provided on the outer circumferential portion of the first pulley 1. The pulley pressing portion 61 is curved in an arc shape along the pulley grooves of the first pulley 1.

A side surface of the pulley pressing portion 61 is provided with the contact portion 63 that comes into contact with the side surface of the flange 13 of the first pulley 1. The contact portion 63 extends from the side surface of the pulley pressing portion 61 toward the axis 1c of the first pulley 1 so as to be in contact with or in close contact with the side surface of the flange 13 of the first pulley 1 in a state in which the belt installation jig 6 is in contact with the outer circumference of the first pulley 1. In the contact portion 63, an edge to be in contact with the V-ribbed belt 4 is chamfered to have a curved surface shape. This edge is provided for preventing the V-ribbed belt 4 from being damaged during winding.

The contact portion 63 provided on the side surface of the pulley pressing portion 61 is provided with the belt guide portion 64 for bending the V-ribbed belt 4, which is introduced from the side surface of the first pulley 1 to the outer peripheral portion of the first pulley 1 across the flange 13, and causing the V-ribbed belt 4 to follow the outer circumferential portion of the first pulley 1. The belt guide portion 64 is disposed on a side where the V-ribbed belt 4 is introduced to the outer circumferential portion of the first pulley 1, that is, on the side surface of the pulley pressing portion 61 and a reverse rotation direction B side of the contact portion 63. In addition, the belt guide portion 64 protrudes from a surface of the pulley pressing portion 61 and also protrudes radially outward of the first pulley 1 in order to ensure a curved surface for causing the V-ribbed belt 4 introduced along the surface of the pulley pressing portion 61 to bend and follow the outer circumferential portion of the first pulley 1.

A side surface of the belt guide portion 64 on the reverse rotation direction B side is provided with a fitting hole 65 into which a fitting portion 72 of the auxiliary tool 7 to be described later is to be press-fitted. The diameter of the fitting hole 65 is formed to be slightly smaller than the diameter of the rod-shaped fitting portion 72 of the auxiliary tool 7 to be described later.

### (Auxiliary Tool 7)

As illustrated in FIG. 5, the auxiliary tool 7 is used to fix the belt installation jig 6 to the first pulley 1, and the belt installation jig 6 is used to wind the V-ribbed belt 4 that is wound around the second pulley 2 and the third pulley 3 around the first pulley 1, which is left, by using the rotation of the first pulley 1.

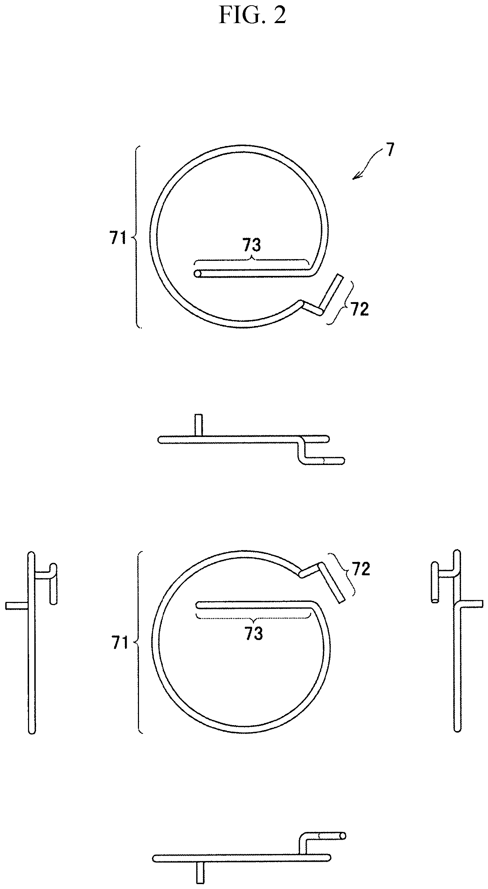

Specifically, as illustrated in FIG. 1 to FIG. 3, the auxiliary tool 7 has a shape that includes terminals and an annular part 71 which is formed by processing a round bar-shaped iron material and which is stretchable in the radial direction. The annular part 71 has a circular shape along the inner wall 12b of the recessed portion 12 of the first pulley 1, and the outer diameter of the annular portion 71 is designed to be slightly larger than the inner diameter φ of the recessed portion 12 provided on the side surface of the first pulley 1 in a no-load state in which contraction is released (a state in which no external force is applied to the annular portion 71: see FIG. 3). Therefore, in a contracted state (a state in which a load is applied such that the outer diameter of the annular part 71 is reduced due to elastic deformation), the annular part 71 can press the inner wall 12b in a state in which the annular part 71 is in contact with the bottom surface 12a (bottom portion) of the recessed portion 12 provided on the side surface of the first pulley 1.

A rod-shaped fitting portion 72 is formed on one terminal of the auxiliary tool 7. The fitting portion 72 protrudes radially outward from the annular part 71 and has a cross-sectional shape with a diameter that is slightly larger than the diameter of the fitting hole 65 provided in the side surface of the belt guide portion 64 of the belt installation jig 6. The belt installation jig 6 is attached to the auxiliary tool 7 by press-fitting the fitting portion 72 into the fitting hole 65.

Further, an L-shaped engaging portion 73 is formed at the other terminal of the auxiliary tool 7. The L-shaped engaging portion 73 engages with any one of the six through holes 12c provided in the bottom surface 12a of the recessed portion 12 of the first pulley 1. Since an L-shaped end of the engaging portion 73 protrudes in an axis (axis 1c) direction, the L-shaped end of the engaging portion 73 can be engaged with an edge of the through hole 12c of the first pulley 1. Accordingly, when the V-ribbed belt 4 is wound around the first pulley 1, a movement of the auxiliary tool 7 itself in the rotation direction of the first pulley 1 can be restrained. Therefore, the belt installation jig 6 can be prevented from being displaced or slipping from the first pulley 1 even when a reaction force acts on the belt installation jig 6 from the V-ribbed belt 4 during the installation operation of the V-ribbed belt 4.

As described above, in the auxiliary tool 7 of the present embodiment, each of the annular part 71, the fitting portion 72, and the engaging portion 73 is formed by bending a single rod-shaped steel material. Accordingly, cost performance in the production of the auxiliary tool 7 can be improved.

Although the material of the auxiliary tool 7 of the present embodiment is iron, a material of the auxiliary tool 7 is not limited to iron and may be stainless steel or a resin as long as the outer diameter of the annular part 71 is variable to such an extent that deformation (expansion and contraction) due to spring elasticity can be obtained. In a case where a high spring elasticity is required to firmly fit the auxiliary tool 7 into the recessed portion 12 of the first pulley 1, or in a case where the auxiliary tool 7 is required to have high durability life, iron is preferable as the material of the auxiliary tool 7.

The shape of the auxiliary tool 7 is not limited to a round bar as described in the present embodiment, and may be, for example, a rod-shaped material having a polygonal cross section. The shape of the annular part 71 is not limited to a perfect circle (circular shape), and may be any shape (a semicircle, an ellipse, etc.) as long as the annular part 71 can be fitted into the recessed portion 12 of the first pulley 1 and can be expanded and contracted in the radial direction of the first pulley 1 by spring elasticity. The L-shaped end of the engaging portion 73 of the auxiliary tool may protrude to a back side of the through hole 12c to such an extent that the end does not interfere with peripheral devices (components) placed on the back side of the first pulley 1.

### (Method for Using Auxiliary Tool 7 to which Belt Installation Jig 6 is Attached)

Next, a method for using the auxiliary tool 7 to which the belt installation jig 6 is attached will be described with reference to FIG. 3 and FIG. 5 to FIG. 8. A crank is connected to the boss portion 11 of the first pulley 1 so that the first pulley 1 can be freely rotated manually.

### <Procedure (a)>

First, as illustrated in FIG. 3, the rod-shaped fitting portion 72 of the auxiliary tool 7 is press-fitted into the fitting hole 65 of the belt installation jig 6 to attach the belt installation jig 6 to the auxiliary tool 7.

### <Procedure (b)>

Next, as illustrated in FIG. 3, the end of the L-shaped engaging portion 73 is engaged with the edge of the through hole 12c of the first pulley 1 in a state in which the annular part 71 of the auxiliary tool 7 is contracted in the radial direction (a state in which a load is applied such that the outer diameter of the annular portion 71 is reduced due to elastic deformation). Then, after the contracted annular part 71 is brought into contact with the bottom surface 12a of the recessed portion 12 of the first pulley 1, the contraction of the annular portion 71 is released, so that the annular part 71 is fitted into the recessed portion 12, and the inner wall 12b of the recessed portion 12 is pressed by the annular part 71. As a result, the auxiliary tool 7 comes into a state of being strongly in contact with the inner wall 12b while being in contact with the bottom surface 12a of the recessed portion 12 of the first pulley 1, and is firmly fitted (fixed) into the first pulley 1. The belt installation jig 6 attached to the auxiliary tool 7 is disposed in a state of being in contact with the outer circumference of the first pulley 1. That is, the plurality of ribs 62 provided on the back side of the pulley pressing portion 61 of the belt installation jig 6 are fitted into the pulley grooves provided on the outer circumferential portion of the first pulley 1, respectively.

In the present embodiment, the auxiliary tool 7 is fixed to the first pulley 1 after the belt installation jig 6 is attached to the auxiliary tool 7. Alternatively, the belt installation jig 6 may be attached to the belt installation jig 7 after the auxiliary tool 7 is fixed to the first pulley 1.

The use of the auxiliary tool 7 can firmly fix the auxiliary tool 7 to which the belt installation jig 6 is attached to the first pulley 1. That is, the belt installation jig 6 can be firmly fixed to the first pulley 1 via the auxiliary tool 7.

When the annular part 71 is brought into contact with the bottom surface 12a of the recessed portion 12 of the first pulley 1, the movement of the belt installation jig 6, which is attached to the fitting portion 72, in the axis (axis 1c) direction can be restrained. Accordingly, the belt installation jig 6 can be appropriately positioned in the axis (axis 1c) direction.

When the end of the L-shaped engaging portion 73 is engaged with the edge of the through hole 12c of the first pulley 1, the movement of the auxiliary tool 7 itself in the rotation direction of the first pulley 1 can be restrained. Therefore, the belt installation jig 6 can be prevented from being displaced or slipping from the first pulley 1 even when a reaction force acts on the belt installation jig 6 from the V-ribbed belt 4 during the installation operation of the V-ribbed belt 4 to be described later.

### <Procedure (c)>

Next, as illustrated in FIG. 5, the V-ribbed belt 4 is wound around the second pulley 2 and the third pulley 3 in a state in which the auxiliary tool 7 to which the belt installation jig 6 is attached is fixed to the first pulley 1. Then, the V-ribbed belt 4 is bent at the belt guide portion 64 across the contact portion 63 covering the flange 13 from the side surface of the first pulley 1, and then is allowed to cross over the pulley pressing portion 61 to follow the outer circumferential portion of the first pulley 1. That is, the V-ribbed belt 4 is temporarily hung on the belt installation jig 6. At this time point, although almost no tension is applied to the V-ribbed belt 4, the belt installation jig 6 does not fall off from the first pulley 1 and the V-ribbed belt 4 can be temporarily hung on the belt installation jig 6 reliably even when the V-ribbed belt 4 is temporarily hung on the belt installation jig 6 since the belt installation jig 6 is firmly fixed to the first pulley 1 via the auxiliary tool 7.

### <Procedure (d)>

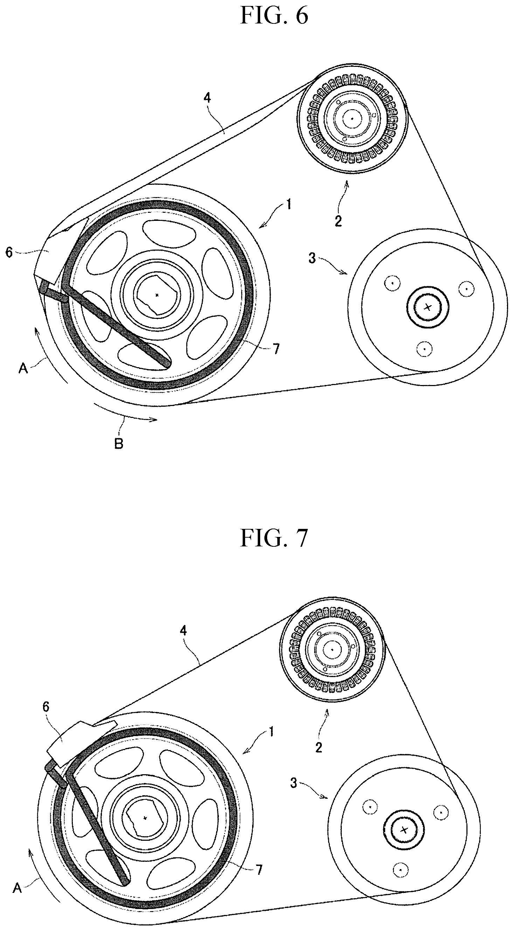

Next, a crank (not illustrated) is connected to the boss portion 11 of the first pulley 1, and the first pulley 1 is rotated in the rotation direction A from a state illustrated in FIG. 5 to a state illustrated in FIG. 6. Then, the V-ribbed belt 4 is stretched to generate a high tension. Since the V-ribbed belt 4 crosses over the pulley pressing portion 61, the tension acts as a pressing action of pressing the pulley pressing portion 61 against the pulley grooves of the first pulley 1, thereby further strengthening the fitting between the plurality of ribs 62 provided on a back surface of the pulley pressing portion 61 and the pulley grooves provided on the outer circumferential portion of the first pulley 1.

At this time, the fitting portion 72 (the terminal on the side on which the belt installation jig 6 is mounted) of the auxiliary tool 7 receives an action of being pulled back in the reverse rotation direction B, that is, in a direction in which the outer diameter of the annular part 71 of the auxiliary tool 7 increases, so that the annular part 71 of the auxiliary tool 7 is further strongly pressed against the inner wall 12b of the recessed portion 12 of the first pulley 1. Therefore, even during the installation operation of the V-ribbed belt 4, the auxiliary tool 7 and the belt installation jig 6 do not slip with respect to the first pulley 1, and do not fall off from the first pulley 1, so that a more stable shift operation of the V-ribbed belt 4 can be performed.

Continuously, the first pulley 1 is rotated in the rotation direction A so as to change from the state illustrated in FIG. 6 to a state illustrated in FIG. 7. Then, the V-ribbed belt 4 on the side surface of the first pulley 1 climbs over the flange 13 and moves on the pulley pressing portion 61.

Further, the first pulley 1 is rotated in the rotation direction A from the state illustrated in FIG. 7 to a state illustrated in FIG. 8. Then, the V-ribbed belt 4 on the pulley pressing portion 61 moves away from the pulley pressing portion 61 to the outer circumferential portion of the first pulley 1. After this movement, the auxiliary tool 7 to which the belt installation jig 6 is attached is removed from the first pulley 1 and collected.

As described above, even after the shift operation of the V-ribbed belt 4 is completed (see FIG. 8), the annular part 71 of the auxiliary tool 7 is pressed against the inner wall 12b of the recessed portion 12 of the first pulley 1. Therefore, the belt installation jig 6 does not fall off even if an action of pushing out the belt installation jig 6 toward a front side of the side surface of the first pulley 1 acts on the belt installation jig 6 immediately after the shift operation of the V-ribbed belt 4 is completed, for example, even if an excessive tension from the V-ribbed belt 4 is applied to the belt installation jig 6 side. Therefore, the installation operation of the V-ribbed belt 4 to the first pulley 1 is more reliable and improved in workability, and there is no need to put a hand on the belt installation jig 6 at all, which contributes to safety.

Through the above procedures, as illustrated in FIG. 8, the V-ribbed belt 4 can be wound around the first pulley 1, the second pulley 2, and the third pulley 3.

As described above, in a series of operations in which the V-ribbed belt 4 wound around the second pulley 2 and the third pulley 3 is wound around the first pulley 1 left lastly, the belt installation jig 6 can be reliably fixed to the first pulley 1 with simple and safe operations by using the auxiliary tool 7 that can be deformed (is stretchable) by spring elasticity. Therefore, the belt installation jig 6 does not fall off from the first pulley 1 during the operation, and the installation operation of the V-ribbed belt 4 can be quickly completed in a short time.

### (Second Embodiment)

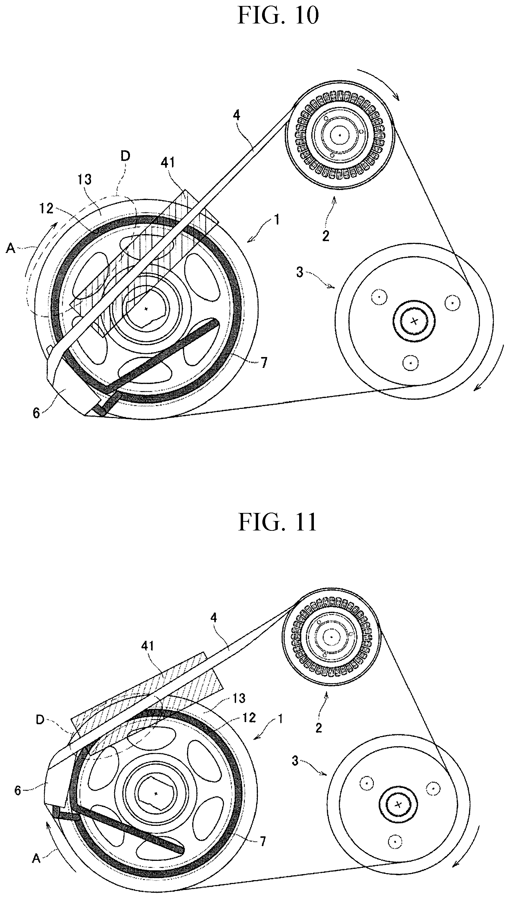

As illustrated in FIG. 4 and FIG. 10, in a case where the cylindrical recessed portion 12 is formed in the side surface of the first pulley 1, a step D (see the step D in FIG. 10) is formed between the side surface of the flange 13 and the recessed portion 12. In a case where the V-ribbed belt 4 is wound around the first pulley 1 in which such the recessed portion 12 is formed, and the V-ribbed belt 4 passes through the side surface of the flange 13, an edge of the V-ribbed belt 4 may be caught by the step D, and the V-ribbed belt 4 may be turned over. Then, when the first pulley 1 is forcibly rotated as it is, the edge of the V-ribbed belt 4 may be damaged.

Therefore, after the V-ribbed belt 4 is temporarily hung on the first pulley 1, the second pulley 2, and the third pulley 3 according to the procedure (c) in the first embodiment, a procedure may be added in which a thin film 41 (thin member) with a smooth surface is interposed between the inner peripheral surface of the V-ribbed belt 4, which is hung to the first pulley 1 from the second pulley 2, and the side surface of the first pulley 1 (the side surface of the flange 13), as illustrated in FIG. 10.

Here, the film 41 may be a thin sheet-shaped durable material with a smooth surface, and examples thereof include a film, a sheet, a plate and the like, formed of polyethylene, a fluorine resin, an acrylic resin, or the like. The film 41 preferably has a coefficient of friction at which the film is easy to slip relative to the first pulley 1 made of iron or stainless steel and is less likely to slip relative to the V-ribbed belt 4 mainly made of a resin material.

Thereafter, the process returns to the procedure (d) of the first embodiment, and the first pulley 1 is rotated in the rotation direction A so as to change from a state illustrated in FIG. 10 to a state illustrated in FIG. 11. Then, the V-ribbed belt 4 hung between the second pulley 2 and the first pulley 1 slides on the side surface of the flange 13 together with the film 41, and moves from an inner side to an outer side in the radial direction of the first pulley 1. Accordingly, the V-ribbed belt 4 can smoothly pass through the step D without being caught by the step D (see the step D in FIG. 11) formed between the side surface of the flange 13 and the recessed portion 12.

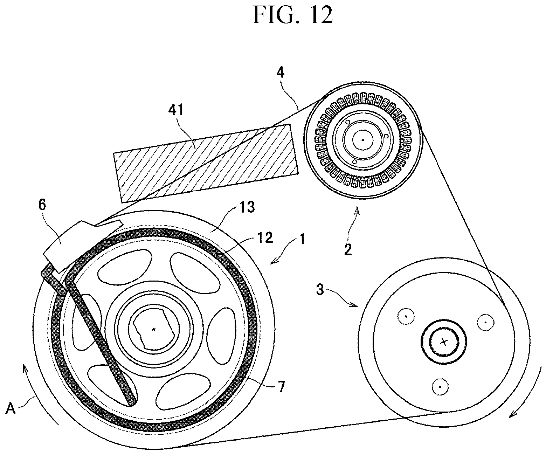

The first pulley 1 is rotated in the rotation direction A from the state illustrated in FIG. 11 to a state illustrated in FIG. 12. Then, the film 41 is separated from the V-ribbed belt 4 and the side surface of the first pulley 1 (the side surface of the flange 13). Then, the separated film 41 is collected.

As described above, when the film 41 is interposed between the inner peripheral surface of the V-ribbed belt 4 and the side surface of the first pulley 1 (the side surface of the flange 13), it is possible to prevent twisting and damage due to the V-ribbed belt 4 being caught by the step D in the installation operation of the V-ribbed belt 4.

### (Other Embodiments)

The belt installation jig to be attached to the auxiliary tool 7 is not limited to the belt installation jig 6 described above, and a known belt installation jig can be appropriately selected and applied. In this case, the method for attaching the belt installation jig to the auxiliary tool 7 is not particularly limited. For example, for the known belt installation jig, it is easy to apply an installation method in which a hole (fitting hole) having an inner diameter slightly smaller than the diameter of the end of the rod-shaped fitting portion 72 of the auxiliary tool 7 is formed, and the fitting portion 72 of the auxiliary tool 7 is press-fitted into the hole.

In the auxiliary tool 7 of the present embodiment, the annular part 71, the fitting portion 72, and the engaging portion 73 are formed by bending a single rod-shaped steel material. Alternatively, the auxiliary tool 7 may be produced by combining the annular part 71, the fitting portion 72, and the engaging portion 73 as separate members.

The auxiliary tool 7 of the present embodiment includes the annular part 71, the fitting portion 72, and the engaging portion 73 as constituent elements. Alternatively, the auxiliary tool 7 may include only the annular part 71 and the fitting portion 72 (a configuration having no engaging portion 73). As described above, only by fitting the annular part 71 into the recessed portion 12 and pressing the inner wall 12b of the recessed portion 12 by the annular part 71, the auxiliary tool 7 to which the belt installation jig 6 is attached can be firmly fixed to the first pulley 1.

In the present embodiment, the first pulley 1 (crank pulley) having the largest diameter is exemplified as a pulley to which the auxiliary tool 7 equipped with the belt installation jig 6 is attached and around which the V-ribbed belt 4 is wound lastly, but the present invention is not limited thereto. The present invention can be applied to any pulley as long as it is a pulley to which the auxiliary tool 7 can be applied (which includes, on a side surface of the pulley, a recessed portion into which the annular part 71 can be fitted or a through hole with which the engaging portion 73 of the auxiliary tool 7 can be engaged). Therefore, the present invention can also be applied to the second pulley 2 (a pulley for a water pump) and the third pulley 3 (a pulley for an air conditioner) each having a diameter smaller than that of the first pulley 1.

In addition, as for the recessed portion 12 into which the annular part 71 of the auxiliary tool 7 is to be fitted, the first pulley 1 in which one recessed portion 12 is formed has been described as an example in the present embodiment, and in a case where a plurality of recessed portions are formed in a stepped manner in the pulley axis direction on a side surface of the pulley, a recessed portion into which the annular part 71 of the auxiliary tool 7 is fitted may be appropriately selected. For example, as illustrated in FIG. 9, in a case where two recessed portions (a first recessed portion and a second recessed portion) are formed in a stepped manner in the pulley axis direction on the side surface of the pulley, the annular part 71 of the auxiliary tool 7 may be designed to be fitted into the first recessed portion formed at the shallowest position, or may be designed to be fitted into the second recessed portion formed at the deepest position (see FIG. 9).

An application example to a triaxial pulley layout including the first pulley 1, the second pulley 2, and the third pulley 3 in a state in which the inter-axial distances are all fixed has been described in the present embodiment, and the present invention may be applied to a pulley layout other than the triaxial pulley layout (a biaxial pulley layout or a pulley layout of four or more axes may be used).

The belt installation method using the V-ribbed belt 4 as the belt wound around the pulleys has been described in the present embodiment, and the belt type is not limited to the V-ribbed belt, and the present invention may be applied to installing a flat belt, a V-belt, or the like to pulleys.

### REFERENCE SIGN LIST

- 1: First pulley
- 11: Boss portion
- 12: Recessed portion
- 12a: Bottom surface
- 12b: Inner wall
- 12c: Through hole
- 13: Flange
- 2: Second pulley
- 3: Third pulley
- 4: V-ribbed belt
- 6: Belt installation jig
- 61: Pulley pressing portion
- 62: Rib
- 63: Contact portion
- 64: Belt guide portion
- 65: Fitting hole
- 7: Auxiliary tool
- 71: Annular part
- 72: Fitting portion
- 73: Engaging portion
- A: Rotation direction
- B: Reverse rotation direction

## Claims

1. An auxiliary tool (7) that fixes a belt installation jig (6) to a pulley, the belt installation jig (6) being used to wind a belt (4) that is stretchable in a circumferential length direction around a plurality of pulleys (1, 2, 3), **characterized in that** the auxiliary tool (7) comprises an annular part (71) stretchable in a radial direction and terminals, and
wherein the annular part (71) has an outer diameter larger than an inner diameter of a bottomed cylindrical recessed portion (12) provided on a side surface of the pulley in a state in which no external force is applied,
in a state in which the annular part (71) is contracted in the radial direction, the annular part (71) is configured to be capable of pressing an inner wall (12b) of the recessed portion (12) in a state in which the annular part (71) is in contact with a bottom portion (12a) of the recessed portion (12), and
one of the terminals is configured to be capable of being attached the belt installation jig (6).

2. The auxiliary tool (7) of the belt installation jig (6), according to Claim 1, wherein the other terminal of the auxiliary tool (7) comprises an engaging portion (73) that engages with a hole (12c) provided in the side surface of the pulley.

3. The auxiliary tool (7) of the belt installation jig (6), according to Claim 1 or 2, wherein the auxiliary tool (7) is formed by bending a single rod-shaped material.

4. A belt installation method of winding a belt stretchable in a circumferential length direction around a plurality of pulleys, the method comprising:
attaching a belt installation jig (6) to one terminal of an auxiliary tool (7) comprising an annular part (71) stretchable in a radial direction and terminals; and
bringing the annular part (71) into contact with a bottom portion (12a) of a bottomed cylindrical recessed portion (12) provided on a side surface of a pulley in a state in which the annular part (71) is contracted, and then releasing the contraction of the annular part (71) to make the annular part (71) press an inner wall (12b) of the recessed portion (12).

5. The belt installation method according to Claim 4, further comprising,
engaging an engaging portion (73) provided at the other terminal of the auxiliary tool (71) with a hole (12c) provided in the side surface of the pulley.

6. The belt installation method according to Claim 4 or 5, further comprising:
interposing a thin member with a smooth surface between the belt hung to the pulley to which the auxiliary tool (71) is fixed from another pulley of the plurality of pulleys and a side surface of the pulley to which the auxiliary tool (71) is fixed; and
rotating the pulley to which the auxiliary tool (71) is fixed in a state in which the thin member (41) is interposed between the belt and the side surface of the pulley to which the auxiliary tool (71) is fixed.

## Patentansprüche

1. Hilfswerkzeug (7), das eine Bandmontagevorrichtung (6) an einer Riemenscheibe befestigt, wobei die Bandmontagevorrichtung (6) dazu verwendet wird, ein Band (4), das in einer Umfangslängsrichtung dehnbar ist, um eine Vielzahl von Riemenscheiben (1, 2, 3) zu wickeln, **dadurch gekennzeichnet, dass** das Hilfswerkzeug (7) ein ringförmiges Teil (71), das in einer radialen Richtung dehnbar ist, und Anschlüsse umfasst, und
wobei das ringförmige Teil (71) in einem Zustand, in dem keine äußere Kraft aufgebracht ist, einen Außendurchmesser aufweist, der größer als ein Innendurchmesser eines mit einem Boden bereitgestellten zylindrischen Aussparungsabschnitts (12) ist, der an einer Seitenfläche der Riemenscheibe bereitgestellt ist,
das ringförmige Teil (71) in einem Zustand, in dem das ringförmige Teil (71) in der radialen Richtung zusammengezogen ist, dazu konfiguriert ist, in der Lage zu sein, eine Innenwand (12b) des Aussparungsabschnitts (12) in einen Zustand zu drücken, in dem das ringförmige Teil (71) in Kontakt mit einem Bodenabschnitt (12a) des Aussparungsabschnitts (12) ist, und
einer der Anschlüsse dazu konfiguriert ist, in der Lage zu sein, an der Bandmontagevorrichtung (6) angebracht zu werden.

2. Hilfswerkzeug (7) der Bandmontagevorrichtung (6) nach Anspruch 1, wobei der andere Anschluss des Hilfswerkzeugs (7) einen Eingriffsabschnitt (73) umfasst, der in ein Loch (12c) eingreift, das in der Seitenfläche der Riemenscheibe bereitgestellt ist.

3. Hilfswerkzeug (7) der Bandmontagevorrichtung (6) nach Anspruch 1 oder 2, wobei das Hilfswerkzeug (7) durch Biegen eines einzelnen stabförmigen Materials gebildet ist.

4. Bandmontageverfahren eines Wickelns eines in einer Umfangslängsrichtung dehnbaren Bands um eine Vielzahl von Riemenscheiben herum, wobei das Verfahren Folgendes umfasst:
Anbringen einer Bandmontagevorrichtung (6) an einem Anschluss eines Hilfswerkzeugs (7), das ein ringförmiges Teil (71), das in einer radialen Richtung dehnbar ist, und Anschlüsse umfasst; und
In-Kontakt-Bringen des ringförmigen Teils (71) mit einem Bodenabschnitt (12a) eines mit einem Boden bereitgestellten zylindrischen Aussparungsabschnitts (12), der an einer Seitenfläche einer Riemenscheibe bereitgestellt ist, in einem Zustand, in dem das ringförmige Teil (71) zusammengezogen ist, und dann Aufheben des Zusammenziehens des ringförmigen Teils (71), um das ringförmige Teil (71) dazu zu bringen, eine Innenwand (12b) des Aussparungsabschnitts (12) zu drücken.

5. Bandmontageverfahren nach Anspruch 4, weiter umfassend,
In-Eingriff-Bringen eines Eingriffsabschnitts (73), der an dem anderen Anschluss des Hilfswerkzeugs (71) bereitgestellt ist, mit einem Loch (12c), das in der Seitenfläche der Riemenscheibe bereitgestellt ist.

6. Bandmontageverfahren nach Anspruch 4 oder 5, weiter umfassend:
Einfügen eines dünnen Elements mit einer glatten Fläche zwischen dem Band, das an die Riemenscheibe, an der das Hilfswerkzeug (71) befestigt ist, von einer anderen Riemenscheibe aus der Vielzahl von Riemenscheiben gehängt wird, und einer Seitenfläche der Riemenscheibe, an der das Hilfswerkzeug (71) befestigt ist; und
Drehen der Riemenscheibe, an der das Hilfswerkzeug (71) befestigt ist, in einem Zustand, in dem das dünne Element (41) zwischen dem Riemen und der Seitenfläche der Riemenscheibe eingefügt ist, an der das Hilfswerkzeug (71) befestigt ist.

## Revendications

1. Outil auxiliaire (7) qui fixe un gabarit d'installation de courroie (6) sur une poulie, le gabarit d'installation de courroie (6) étant utilisé pour enrouler une courroie (4) qui peut être étirée dans une direction longitudinale circonférentielle autour d'une pluralité de poulies (1, 2, 3), **caractérisé en ce que** l'outil auxiliaire (7) comprend une partie annulaire (71) qui peut être étirée dans une direction radiale ainsi que des bornes, et
dans lequel la partie annulaire (71) présente un diamètre extérieur supérieur à un diamètre intérieur d'une portion évidée cylindrique inférieure (12) prévue sur une surface latérale de la poulie dans un état où aucune force externe n'est appliquée,
dans un état où la partie annulaire (71) est contractée dans la direction radiale, la partie annulaire (71) est configurée pour être capable de presser une paroi intérieure (12b) de la partie évidée (12) dans un état où la partie annulaire (71) est en contact avec une portion inférieure (12a) de la partie évidée (12), et
une des bornes est configurée pour être capable d'être attachée au gabarit d'installation de courroie (6).

2. Outil auxiliaire (7) du gabarit d'installation de courroie (6), selon la revendication 1, dans lequel l'autre borne de l'outil auxiliaire (7) comprend une portion d'engagement (73) qui s'engage avec un trou (12c) prévu dans la surface latérale de la poulie.

3. Outil auxiliaire (7) du gabarit d'installation de courroie (6), selon la revendication 1 ou la revendication 2, dans lequel l'outil auxiliaire (7) est formé en pliant un seul matériau en forme de tige.

4. Procédé d'installation de courroie destiné à enrouler une courroie qui peut être étirée dans une direction longitudinale circonférentielle autour d'une pluralité de poulies, le procédé comprenant :
attacher un gabarit d'installation de courroie (6) sur une borne d'un outil auxiliaire (7) comprenant une partie annulaire (71) qui peut être étirée dans une direction radiale ainsi que des bornes ; et
amener la partie annulaire (71) en contact avec une portion inférieure (12a) d'une portion évidée cylindrique inférieure (12) prévue sur une surface latérale d'une poulie dans un état où la partie annulaire (71) est contractée, puis libérer la contraction de la partie annulaire (71) afin que la partie annulaire (71) presse une paroi intérieure (12b) de la portion évidée (12).

5. Procédé d'installation de courroie selon la revendication 4, comprenant en outre :
engager une portion d'engagement (73) prévue au niveau de l'autre borne de l'outil auxiliaire (71) avec un trou (12c) prévu dans la surface latérale de la poulie.

6. Procédé d'installation de courroie selon la revendication 4 ou la revendication 5, comprenant en outre :
interposer un élément mince avec une surface lisse entre la courroie accrochée à la poulie sur laquelle l'outil auxiliaire (71) est fixé à partir d'une autre poulie de la pluralité de poulies et une surface latérale de la poulie sur laquelle l'outil auxiliaire (71) est fixé ; et
faire tourner la poulie sur laquelle l'outil auxiliaire (71) est fixé dans un état où l'élément mince (41) est interposé entre la courroie et la surface latérale de la poulie sur laquelle l'outil auxiliaire (71) est fixé.
